# EUROPEAN PATENT SPECIFICATION

(11) **EP 1 128 397 B1**
(45) Date of publication and mention of the grant of the patent: **09.02.2005**
(21) Application number: 01400437.8
(22) Date of filing: 20.02.2001
(51) Int. Cl.: H01B 7/295, H01B 7/28, H01B 3/44

(54) **Fire-resistant and water-resistant halogen-free low-voltage cables**
Feuerbeständige und wasserfeste halogenfreie Niederspannungskabel
Câbles à basse tension ignifuges non halogénés et étanches à l'eau

(30) Priority: 21.02.2000 EP 00400463
(43) Date of publication of application: 29.08.2001
(73) Proprietor: CABLES PIRELLI, F-94410 Saint Maurice (FR)
(72) Inventor: Bisleri, Cesare, 20060 Cassina de Pecchi (MI) (IT); Fondeur, Jean-Hubert, 89100 Sens (FR)
(74) Representative: Casalonga, Axel

(56) References cited:
- WO-A-99/05688
- GB-A- 2 294 801

## Description

### BACKGROUND OF THE INVENTION

### Field of the invention

The present invention relates to electrical cables, in particular low-voltage electrical cables having improved fire resistance and water resistance.

### Description of the prior art

Fire-resistant cables including polyolefin layers containing an organic halogenide or other fire retardants are known in the art.

The disadvantages of using halogenated flame retardant compounds, in particular in connection with fabrication of the above cables and their possible corrosive effect on metal parts of the equipment, are known in the art.

PCT WO 99/05688 discloses cables with good fire resistance properties, including a layer of crystalline propylene homopolymer or copolymer blended with a copolymer of ethylene with at least one α-olefin and possibly a diene.

The above compounds contain a natural magnesium hydroxide in quantities which confer fire retardant properties on the cables.

The above application mentions the possible use of an internal insulative layer that is relatively thick compared with the layer containing the fire retardant.

European application EP 0 378 259 discloses high-voltage connecting cables including a metal wire surrounded by a first insulative layer from 0.3 to 1.5 mm thick and including a copolymer of propylene and at least one other alkene, the first insulative jacket being covered with a second insulative jacket that is not crosslinked and is from 1.0 to 3 mm thick, containing polyvinyl chloride or a vinyl chloride copolymer. The second jacket includes fire retardant additives.

GB patent 2 294 801 concerns an electrical cable including a conductor embedded in a hydrophobic material and surrounded by a layer of fire retardant material. The cable is used in the field of telecommunications in particular.

However, we have found that using a covering including a layer containing the fire retardant as described in PCT WO 99/05688 makes the water resistance of the cable unsatisfactory, failing to comply with the relevant requirements. Also, when the thick insulative additional layer is used, the cable has fire resistance problems.

We have found that when the cable is live in the presence of moisture the water tends to penetrate the cable and reduce its insulation, leading to breakdown of the cable.

The invention therefore relates to a low-voltage electrical cable, preferably a single-conductor cable, having improved fire resistance and flame propagation resistance, containing no halogenides and complying with IEC standards, the cable having improved water resistance. The combination also aims to improve the mechanical properties of the cable and its resistance to short circuits.

The cable according to the invention must have a fire resistance complying with the following standards: IEC 332-3c (March 1992), NFEN 50 266-2 section 4 of February 1999, and NFC 32070 section 2 and 2.2 of March 1991, and the additions A1 of July 1992 and A2 of November 1993, and a water resistance such that it resists salt water (10 g/l NaCl) at 60°C at a voltage of 220 V DC for at least ten days, complying with NFC-32-201-2, art. 2.5 of October 1998 and NFC-32-201-1 table 3, section 5 of October 1998.

We have discovered that the above problems can be solved by developing a cable featuring a double layer, the layers having relative thicknesses such that the cable has at one and the same time improved fire resistance properties and improved water resistance properties, in both cases complying with the aforementioned standards.

### SUMMARY OF THE INVENTION

The invention provides a fire-resistant and water-resistant low-voltage electrical cable including a conductor and a first internal layer to protect it against water based on a polymer compound containing no halogen, crosslinked or not, and a second layer consisting of a blend of a crystalline propylene homopolymer or copolymer and of a copolymer of ethylene and at least one α-olefin, optionally with a diene, and of an agent having fire retardant properties, the ratio of the thicknesses of the outer layer and the internal layer being from 1 to 7.

Depending on the cross section of the conductor, the internal layer preferably has a thickness from 0.05 to 1 mm and the outer layer preferably has a thickness from 0.25 to 2 mm.

In accordance with the invention, the inner layer covering the conductor is a layer of an olefin polymer containing no halogenide, crosslinked or not, preferably chosen from polyolefins and more particularly olefin homopolymers or copolymers, copolymers of an olefin with ethylenically unsaturated esters, polyesters, polyethers, polyether/polyester copolymers and blends thereof.

The polymers can include polyethylene and in particular linear low-density polyethylene (LLDPE), polypropylene, a thermoplastic propylene-ethylene copolymer, ethylene-propylene rubbers (EPR) or ethylene-propylene-diene rubbers (EPDM), natural rubbers, butyl rubbers, ethylene/vinyl acetate (EVA) copolymers, ethylene/methacrylate (EMA) copolymers, ethylene/ethyl acrylate (EEA) copolymers, ethylene/butyl acrylate (EBA) copolymers and ethylene/α-olefin copolymers.

The fire retardant outer layer is preferably a blend of a crystalline propylene homopolymer or copolymer and of a copolymer of ethylene with an α-olefin, possibly with a diene, said copolymers having a narrow molecular weight distribution, characterized by a molecular weight distribution index, defined as the ratio of the weight-average molecular weight M_{w} to the number-average molecular weight Mₙ, less than 5, preferably from 1.5 to 3.5, as determined by gel permeation chromatography and a fire retardant.

The α-olefins can be α-olefins with the formula:

CH₂ = CH-R

where R is a linear or branched alkyl radical having from 1 to 10 carbon atoms.

In particular, they can be propylene, 1-butene, 1-pentene, 4-methyl-1-pentene, 1-hexene, 1-octene, 1-dodecene, etc.

The α-olefins are preferably the propylene, 1-hexene and 1-octene radicals.

When the α-olefin is propylene, the copolymers can be characterized by a high domain regularity in the sequence of monomer units. In particular, these copolymers have a number of CH₂ groups in the -(CH₂)ₙ- sequences, where n is an integer, relative to the total number of CH₂ groups less than 5%/mol, preferably less than 1%/mol. This can be determined by NMR analysis using carbon-13. This is known in the art.

When the comonomer is a diene, it generally has 4 to 20 carbon atoms and is preferably chosen from conjugated or unconjugated linear diolefins such as, for example, 1,3-butadiene, 1,4-hexadiene or 1,6-octadiene; monocyclic or polycyclic dienes such as, for example, 1,4-cyclohexadiene, 5-ethylidene norbornene, 5-methylene-2-norbornene, etc.

In accordance with the invention, the composition of the outer layer is obtained by using blends of the two polymers containing from 5 to 60 wt% and preferably from 10 to 40 wt% of a crystalline propylene homopolymer or copolymer (a) and from 40 to 95 wt% and preferably from 60 to 90 wt% of the ethylene/α-olefin copolymer (b) relative to the total weight of the polymer components of the compound.

The compounds preferably contain, as fire retardants, natural or synthetic aluminum and/or magnesium hydroxide. The natural magnesium oxide can be obtained, for example, by grinding minerals based on magnesium hydroxide such as brucite. Brucite can generally be obtained mixed with other minerals such as calcite, aragonite, talc or magnesite, often in laminar form between silicate deposits, especially in serpentine asbestos, chlorites or schists.

In accordance with the invention, the brucite is ground employing a wet or dry technique known in the art and in the presence of additives such as polyglycols.

The specific surface area of the ground product is generally from 3 to 20 m²/g and preferably from 6 to 15 m²/g.

The ground product can be subjected to a separation process to obtain a range of particle sizes from 1 to 15 µm and preferably from 1 to 5 µm. The particle distribution is such that less than 10% of the total number of particles have a particle size less than 1.5 µm and less than 10% of the total number of particles have a particle size greater than 20 µm.

. If the fire retardant is of natural origin, it may contain various impurities derived from oxides and/or hydroxides of metals such as iron, manganese, calcium, silicon, vanadium, etc.

Magnesium hydroxide obtained by chemical methods known in the art can also be used, for example by basic precipitation from an aqueous solution containing the Mg²⁺ ion.

The magnesium hydroxide can be used as such or can be treated with saturated or unsaturated fatty acids containing 8 to 24 carbon atoms or metal salts thereof, for example with oleic acid, palmitic acid, stearic acid, isostearic acid, lauric acid, magnesium or zinc stearate, magnesium or zinc oleate.

The particles can also be surface-treated with coupling agents such as organic titanates or silanes, such as vinyltriethoxysilane, vinyltriacetylsilane, tetraisopropyltitanate, tetra-n-butyl titanate, etc.

The copolymers (b) of the outer layer are preferably copolymers of ethylene with at least one C₃-C₁₂ α-olefin, possibly a diene, these copolymers having elastomeric properties characterized by:
- an enthalpy of melting less than 35 J/g and preferably less than 30 J/g;
- an intrinsic viscosity (η) generally greater than 100 l/kg (1.0 dl/g), and preferably greater than 200 l/kg (2.0 dl/g), determined in tetraline at 135°C;
- a Mooney ML (1+4) viscosity at 125°C, measured as per ASTM standard D 1646, generally greater than 10 and preferably from 20 to 90;
- a solubility in pentane at 20°C generally greater than 80 wt%; and
- a permanent set of less than 30% measured one minute after removal of the stress, which allowed elongation to 200% as per ASTM standard D 412.

These copolymers generally have the following composition: 35 to 90 mol% of ethylene 10 to 65 mol% of α-olefin, preferably propylene, 0.10 mol% of a diene, preferably 1,4-hexadiene or 5-ethylidene norbornene.

When the α-olefin is propylene, the monomer composition is preferably as follows: 55 to 80 wt% and preferably 65 to 75 wt% of ethylene, 20 to 45 wt% and preferably 25 to 35 wt% of propylene; 0 to 10 wt% and preferably 0 to 5 wt% of a diene (preferably 5-ethylene-2-norbornene).

A second family of copolymers that can be used in the outer layer are copolymers of ethylene with at least one C₄-C₁₂ α-olefin, preferably 1-octene, and possibly a diene, characterized by:
- a density from 0.86 to 0.90 g/cm³;
- an enthalpy of melting from 30 to 60 J/g;
- a melt-flow index measured as per ASTM standard D 1238 L from 0.1 to 30 g/10 minutes, preferably from 0.5 to 5 g/10 minutes.

These copolymers preferably have the following composition: 75 to 97 mol% and preferably 90 to 95 mol% of ethylene; 3 to 25 mol% and preferably 5 to 10 mol% of α-olefin and 0 to 5 mol% and preferably 0.2 mol% of a diene.

The crystalline propylene homopolymers or copolymers generally have an enthalpy of melting greater than 75 J/g and preferably greater than 85 J/g. They are preferably chosen from:
- isotactic propylene homopolymers having an isotactic index greater than 80, preferably greater than 90 and in particular greater than 95;
- propylene homopolymers obtained using metallocene catalysts, having an mmmmm pentad concentration greater than 90% as determined by NMR analysis using carbon-13;
- copolymers of propylene with ethylene or an α-olefin having from 4 to 10 carbon atoms and an ethylene and/or α-olefin concentration less than 10 mol%;
- heterophase propylene copolymers which can be obtained by block polymerization of propylene and mixtures of propylene with ethylene and/or an α-olefin having 4 to 10 carbon atoms and containing at least 70 wt% of propylene homopolymers and crystalline ethylene/propylene copolymers with an isotactic index greater than 80, the remainder consisting of elastomeric ethylene/propylene copolymers with a propylene content from 30 to 70 wt%; and
- crystalline propylene homopolymers or copolymers having a syndiotactic structure that can be obtained using metallocene catalysts.

The quantity of magnesium hydroxide used as a fire retardant is finally from 10 to 90 wt% and preferably from 30 to 80 wt% relative to the total weight of the compound.

Other fillers having flame retardant properties can be used, such as aluminum hydroxide or aluminum trihydrate (Al₂O₃·3H₂O) or one or more oxides or inorganic salts such as CoO, TiO₂, Sb₂O₃, ZnO, Fe₂O₃, CaCO₃ or mixtures thereof.

As indicated above, to improve the compatibility of the magnesium hydroxide with the polymer matrix, coupling agents can be used to improve the interaction between the hydroxyl groups of the magnesium hydroxide and the polyolefin chains.

The coupling agents are preferably chosen from unsaturated silane derivatives, preferably silanes containing at least one ethylenically unsaturated group: epoxides containing an ethylenically unsaturated group, monocarboxylic acids or preferably dicarboxylic acids having at least one ethylenically unsaturated group or derivatives thereof, such as anhydrides or esters.

The silanes include γ-methacryloxypropyltrimethoxysilane, methyltriethoxysilane, tris-(2-methoxyethoxy)methylsilane, dimethyldiethoxysilane, tris-(2-methoxyethoxy)vinylsilane, vinyltrimethoxysilane, vinyltriethoxysilane, octyltriethoxysilane, isobutyltriethoxysilane, isobutyltrimethoxysilane and mixtures thereof.

The epoxides include glycidyl acrylates, glycidyl methacrylate, the monoglycidyl ester of itaconic acid, the glycidyl ester of maleic acid, vinyl glycidyl ether, allyl glycidyl ether or mixtures thereof.

The monocarboxylic or dicarboxylic acids including an ethylenically unsaturated group include maleic acid, maleic anhydride, fumaric acid, citraconic acid, itaconic acid, acrylic acid, methacrylic acid, their esters and anhydrides or mixtures thereof, maleic anhydride being preferred.

The coupling agent is generally used in quantities from 0.01 to 5 wt% and preferably 0.05 to 2 wt% relative to the total weight of the base polymer blend.

These compounds can also contain antioxidants, processing aids, lubricants, pigments and other fillers.

The compounds are prepared by mixing the polymers and the additives by methods known in the art.

The layers can be applied by extrusion, for example, or by extrusion in two separate stages, consisting in extruding the inner layer onto the conductor in a first stage and the outer layer onto the inner layer in a second stage.

In a preferred embodiment the two layers are applied in a single stage using a so-called "tandem" process in which two separate extruders in series are used or by coextrusion using a single extrusion head.

Cables according to the invention are intended in particular to be used in environments where there are moisture problems or places for which there are special safety conditions in the event of fire, such as public places, storage areas, test areas or working areas likely to receive inflammable products. They have improved short-circuit resistance.

The following examples are intended to illustrate the invention without limiting it.

The following composition was prepared:

**Table I**

| Composition | Weight % |
|---|---|
| Engage 8003 | 20.9 |
| Moplen EP1X35 F | 3.7 |
| Hydrofy G. 1.5 S | 73.3 |
| Irganox MD 1024 | 0.074 |
| Irganox 1010 | 0.20 |
| Stearic acid | 0.37 |
| VTMOEO silane | 0.74 |
| Peroximon DC | 0.074 |

The cable had a cross section of 1.5 mm² and a nominal total insulation thickness of 0.7 mm.

**Table II**

| Sample | A | B | C |
|---|---|---|---|
| Composition (Table I) (outer layer - mm) | 0.7 | 0.5 | 0.2 |
| | | | |
| Escorene LL 1004 (inner layer - mm) | 0 | 0.2 | 0.5 |
| | | | |
| Tensile strength (MPa) * | 12.2 | 14.2 | 17.6 |
| | | | |
| Elongation at break (%) ** | 110 | 170 | 210 |
| | | | |
| Aging in salt water ** (10 days) (NF-C 32-201-2) | no | yes | yes |
| | | | |
| Fire propagation test (IEC 332.3C of March 1992) | yes | yes | no |
| | | | |
| Elongation at break | no | yes | yes |
| | | | |
| Stress at break | no | yes | yes |

| | | | |
|---|---|---|---|
| * As per standard NF-C 32-201-1, table 1 section 1.1 column 6, October 1998. | | | |
| ** As per standard NF-C 32-201-2, art. 2-5, October 1998 and NF-C 32-201-1, table 3 section 5, October 1998. | | | |

Examples A and C are comparative.

Escorene LL 1004 is classified as a linear low density polyethylene. It's an ethylene/1-butene copolymer produced by Exxon-Mobil with a MFI : 2.8g/10min, a density : 0.918 g/cm3 and a melting point : 121°c. Its direct current volume resistivity is at least 1*10¹⁵ ohm*cm.

**Engage 8003** is an ethylene/1-octene copolymer obtained by metallocene catalysis.

The ratio by weight of ethylene/1-octene was equal to 82/18 (5.5 mol% of 1-octene, density = 0.885 g/cm³; MFI = 1.0 g/10 minutes; CDI > 70%; ΔH2m = 55.6 J/g).

**Moplen** (EP1X35 HF) is a crystalline propylene/ethylene copolymer (d =0.900 g/cm³; MFI = 9.0 g/10 minutes; Tₘ = 154°C; ΔH2m = 90.6 J/g).

**Hydrofy G 1.5 S** is a magnesium hydroxide from SIMA surface-treated with stearic acid and has an aqueous extract conductivity of 290 µS/cm, a specific surface area of 10.4 m²/g; and a particle size distribution expressed in µm of:

**Table III**

| 10% | 50% | 80% |
|---|---|---|
| 0.7 (average) | 2.1 | 6.4 |

**Irganox MD 1024** is an antioxidant from CIBA with the formula:

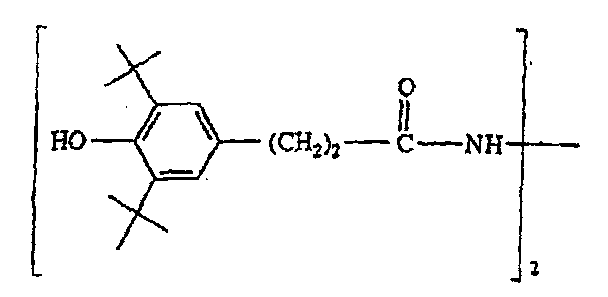

**Irganox 1010** is an antioxidant from CIBA having the formula:

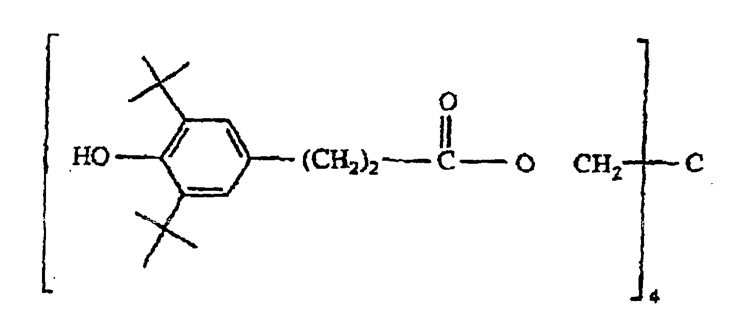

**VTMOEO silane** is tris-(2-methoxyethoxy)vinylsilane with the formula CH₂=CH-Si(OCH₂H₄OCH₃)₃ with a purity of not less than 99 wt%.

**Peroximon DC** is dicumyl peroxide with a purity of not less than 99 wt% and the following formula:

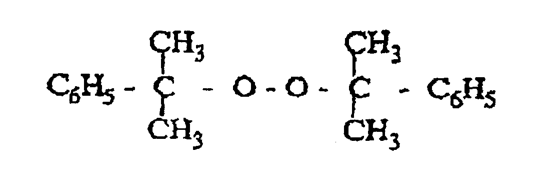

## Claims

1. A fire-resistant and water-resistant low-voltage electrical cable including a conductor and a first internal layer to protect it against water based on a polymer compound containing no halogen, crosslinked or not, and an outer second layer consisting of a blend of a crystalline propylene homopolymer or copolymer and of a copolymer of ethylene and at least one α-olefin, optionally with a diene, and of an agent having fire retardant properties, **characterised in that** the ratio of the thicknesses of the outer layer and the internal layer is from 1 to 7.

2. The cable claimed in claim 1 wherein the thickness of said internal layer is from 0.05 to 1 mm.

3. The cable claimed in claim 1 wherein the thickness of said outer layer is from 0.25 to 2 mm.

4. The cable claimed in claim 1 wherein said inner layer is made of a polymer chosen from polyolefins, copolymers of an olefin with ethylenically unsaturated esters, polyesters, polyethers, polyether/polyester copolymers and blends thereof.

5. The cable claimed in claim 4 wherein said polymer is chosen from polyethylene, polypropylene thermoplastic propylene-ethylene copolymers, ethylene-propylene or ethylene-propylene-diene rubbers, natural rubbers, butyl rubbers, ethylene/vinyl acetate, ethylene/ethyl acrylate, ethylene/butyl acrylate copolymers, ethylene/α-olefin copolymers and blends thereof.

6. The cable claimed in claim 1 wherein said outer layer includes as crystalline propylene homopolymer or copolymer a polymer having an enthalpy of melting greater than 75 J/g and preferably greater than 85 J/g.

7. The cable claimed in claim 1 wherein the second copolymer in said outer layer is a copolymer with a narrow molecular weight distribution and having a molecular weight distribution index less than 5 as determined by gel permeation chromatography.

8. The cable claimed in claim 1 wherein said α-olefin is chosen from propylene, 1-butene, 1-pentene, 4-methyl-1-pentene, 1-hexene, 1-octene, 1-dodecene.

9. The cable claimed in claim 7 wherein said diene is chosen from linear conjugated or unconjugated diolefins and in particular 1,3-butadiene, 1,4-hexadiene, 1,6-octadiene, monocyclic or polycyclic dienes.

10. The cable claimed in claim 1 wherein said agent having fire retardant properties is a magnesium and/or aluminum hydroxide.

11. The cable claimed in claim 10 wherein said magnesium hydroxide is present in said outer layer in proportions from 10 to 90 wt%.

12. The cable claimed in claim 10 wherein said magnesium hydroxide is used with coupling agents to improve the interaction between said magnesium hydroxide and said olefin polymers.

13. The cable claimed in claim 12 wherein said coupling agents are chosen from unsaturated silanes, ethylenically unsaturated epoxides, ethylenically unsaturated monocarboxylic or dicarboxylic acids, their anhydrides and esters.

14. A method of manufacturing a fire-resistant and water-resistant low-voltage electrical cable comprising the step of applying a first internal layer and an outer second layer by extrusion onto a conductor, wherein the first internal layer, applied to protect the conductor against water, is based on a polymer compound containing no halogen, crosslinked or not, and the outer layer consists of a blend of a crystalline propylene homopolymer or copolymer and of a copolymer of ethylene and at least one α-olefin, optionally with a diene, and of an agent having fire retardant properties,
**characterised in that** the layers are applied by extrusion with a ratio of the thicknesses of the outer layer and the internal layer being from 1 to 7.

15. The method claimed in claim 14 wherein the thickness of said internal layer is from 0.05 to 1 mm.

16. The method claimed in claim 14 wherein the thickness of said outer layer is from 0.25 to 2 mm.

17. The method claimed in claim 14 wherein said inner layer is made of a polymer chosen from polyolefins, copolymers of an olefin with ethylenically unsaturated esters, polyesters, polyethers, polyether/polyester copolymers and blends thereof.

18. The method claimed in claim 17 wherein said polymery is chosen from polyethylene, polypropylene, thermoplastic propylene-ethylene copolymers, ethylene-propylene or ethylene-propylene-diene rubbers, natural rubbers, butyl rubbers, ethylene/vinyl acetate, ethylene/ethyl acrylate, ethylene/butyl acrylate copolymers, ethylene/ α-olefin copolymers and blends thereof.

19. The method claimed in claim 14 wherein said outer layer includes as crystalline propylene homopolymer or copolymer a polymer having an enthalpy of melting greater than 75 J/g and preferably greater than 85 J/g.

20. The method claimed in claim 14 wherein the second copolymer in said outer layer is a copolymer with a narrow molecular weight distribution and having a molecular weight distribution index less than 5 as determined by gel permeation chromatography.

21. The method claimed in claim 14 wherein said α-olefin is chosen from propylene, 1-butene, 1-pentene, 4-methyl-1-pentene, 1-hexene, 1-octene, 1-dodecene.

22. The method claimed in claim 20 wherein said diene is chosen from linear conjugated or unconjugated diolefins and in particular 1,3-butadiene, 1,4-hexadiene, 1,6-octadiene, monocyclic or polycyclic dienes.

23. The method claimed in claim 14 wherein said agent having fire retardant properties is a magnesium and/or aluminum hydroxide.

24. The method claimed in claim 23 wherein said magnesium hydroxide is present in said outer layer in proportions from 10 to 90 wt%.

25. The method claimed in claim 23 wherein said magnesium hydroxide is used with coupling agents to improve the interaction between said magnesium hydroxide and said olefin polymers.

26. The method claimed in claim 25 wherein said coupling agents are chosen from unsaturated silanes, ethylenically unsaturated epoxides, ethylenically unsaturated monocarboxylic or dicarboxylic acids, their anhydrides and esters.

27. A method of manufacturing a fire-resistant and water-resistant low-voltage electrical cable according to claims 14-26, wherein the layers are applied by extrusion in two separate stages, consisting in extruding the internal layer onto the conductor in a first stage and the outer layer onto the internal layer in a second stage.

28. A method of manufacturing a fire-resistant and water-resistant low-voltage electrical cable according to claims 14-26, wherein the layers are applied by extrusion in a single stage.

29. Use in wet environments of a fire-resistant and water-resistant low-voltage electrical cable as defined in claims 1-13.

30. Use in premises with special safety conditions in the event of fire of a fire-resistant and water-resistant low-voltage electrical cable as defined in claims 1-13.

## Patentansprüche

1. Feuerbeständiges und wasserbeständiges elektrisches Niederspannungskabel, das einen Leiter und eine erste innere Schicht, um ihn gegen Wasser zu schützen, auf Basis einer Polymerverbindung, die kein Halogen enthält und vernetzt oder nicht-vernetzt ist, und eine äussere zweite Schicht einschliesst, die aus einer Mischung eines kristallinen Propylen-Homopolymers oder -Copolymers und eines Copolymers von Ethylen und mindestens einem α-Olefin, gegebenenfalls mit einem Dien, sowie einem Mittel mit feuerhemmenden Eigenschaften besteht, **dadurch gekennzeichnet, dass** das Verhältnis der Dicken der äusseren Schicht und der inneren Schicht 1 bis 7 ist.

2. Kabel wie in Anspruch 1 beansprucht, wobei die Dicke der inneren Schicht von 0,05 bis 1 mm ist.

3. Kabel wie in Anspruch 1 beansprucht, wobei die Dicke der äusseren Schicht 0,25 bis 2 mm ist.

4. Kabel wie in Anspruch 1 beansprucht, wobei die innere Schicht aus einem Polymer besteht, das aus Polyolefinen, Copolymeren eines Olefins mit ethylenisch ungesättigten Estern, Polyestern, Polyethern, Polyether/Polyester-Copolymeren und Mischungen davon ausgewählt ist.

5. Kabel wie in Anspruch 4 beansprucht, wobei das Polymer aus Polyethylen, Polypropylen, thermoplastischen Propylen/Ethylen-Copolymeren, Ethylen-Propylen- oder Ethylen-Propylen-Dien-Kautschuken, natürlichen Kautschuken, Butylkautschuken, Ethylen/Vinylacetat-, Ethylen/Ethylacrylat-, Ethylen/Butylacrylat-Copolymeren, Ethylen/α-Olefin-Copolymeren und Mischungen davon ausgewählt ist.

6. Kabel wie in Anspruch 1 beansprucht, wobei die äussere Schicht als kristallin Propylen-Homopolymer oder -Copolymer ein Polymer mit einer Schmelzenthalpie grösser als 75 J/g und vorzugsweise grösser als 85 J/g enthält.

7. Kabel wie in Anspruch 1 beansprucht, wobei das zweite Copolymer in der äusseren Schicht ein Copolymer mit einer engen Molekulargewichtsverteilung ist, das einen Molekulargewichts-Verteilungsindex von weniger als 5, bestimmt mittels Gelpermeationschromatografie, besitzt.

8. Kabel wie in Anspruch 1 beansprucht, wobei das α-Olefin aus Propylen, 1-Buten, 1-Penten, 4-Methyl-1-penten, 1-Hexen, 1-Octen und 1-Dodecen ausgewählt ist.

9. Kabel wie in Anspruch 7 beansprucht, wobei das Dien aus linearen konjugierten oder unkonjugierten Diolefinen und insbesondere 1,3-Butadien, 1,4-Hexadien, 1,6-Octadien und monocyclischen oder polycyclischen Dienen ausgewählt ist.

10. Kabel wie in Anspruch 1 beansprucht, wobei das Mittel mit feuerhemmenden Eigenschaften ein Magnesium- und/oder Aluminiumhydroxid ist.

11. Kabel wie in Anspruch 10 beansprucht, wobei das Magnesiumhydroxid in der äusseren Schicht in Anteilen von 10 bis 90 Gew.% vorliegt.

12. Kabel wie in Anspruch 10 beansprucht, wobei das Magnesiumhydroxid mit Kopplungsmitteln verwendet wird, um die Wechselwirkung zwischen dem Magnesiumhydroxid und den Olefinpolymeren zu verbessern.

13. Kabel wie in Anspruch 12 beansprucht, wobei die Kopplungsmittel aus ungesättigten Silanen, ethylenisch ungesättigten Epoxiden, ethylenisch ungesättigten Monooder Dicarbonsäuren, ihren Anhydriden und Estern ausgewählt sind.

14. Verfahren zur Herstellung eines feuerbeständigen und wasserbeständigen elektrischen Niederspannungskabels, welches die folgenden Schritte umfasst: Aufbringen einer ersten inneren Schicht und einer äusseren zweiten Schicht durch Extrusion auf einen Leiter, wobei die erste innere Schicht, die angebracht ist, um den Leiter gegen Wasser zu schützen, auf einer Polymerverbindung basiert, die kein Halogen enthält und vernetzt oder nicht-vernetzt ist, und die äussere Schicht aus einer Mischung eines kristallinen Propylen-Homopolymers oder -Copolymers und eines Copolymers von Ethylen und mindestens einem α-Olefin, gegebenenfalls mit einem Dien, und einem Mittel mit feuerhemmenden Eigenschaften besteht, **dadurch gekennzeichnet, dass** die Schichten durch Extrusion mit einem Verhältnis der Dicken der äusseren Schicht und der inneren Schicht von 1 bis 7 aufgebracht werden.

15. Verfahren wie in Anspruch 14 beansprucht, wobei die Dicke der inneren Schicht 0,05 bis 1 mm ist.

16. Verfahren wie in Anspruch 14 beansprucht, wobei die Dicke der äusseren Schicht 0,25 bis 2 mm ist.

17. Verfahren wie in Anspruch 14 beansprucht, wobei die innere Schicht aus einem Polymer besteht, das aus Polyolefinen, Copolymeren eines Olefins mit ethylenisch ungesättigten Estern, Polyestern, Polyethern, Polyether/Polyester-Copolymeren und Mischungen davon ausgewählt ist.

18. Verfahren wie in Anspruch 17 beansprucht, wobei das Polymer aus Polyethylen, Polypropylen, thermoplastischen Propylen/Ethylen-Copolymeren, Ethylen-Propylenoder Ethylen-Propylen-Dien-Kautschuken, natürlichen Kautschuken, Butylkautschuken, Ethylen/Vinylacetat-, Ethylen/Ethylacrylat-, Ethylen/Butylacrylat-Copolymeren, Ethylen/α-Olefin-Copolymeren und Mischungen davon ausgewählt ist.

19. Verfahren wie in Anspruch 14 beansprucht, wobei die äussere Schicht als kristallin Propylen-Homopolymer oder -Copolymer ein Polymer mit einer Schmelzenthalpie grösser als 75 J/g und vorzugsweise grösser als 85 J/g enthält.

20. Verfahren wie in Anspruch 14 beansprucht, wobei das zweite Copolymer in der äusseren Schicht ein Copolymer mit einer engen Molekulargewichtsverteilung ist, das einen Molekulargewichts-Verteilungsindex von weniger als 5, bestimmt mittels Gelpermeationschromatografie, besitzt.

21. Verfahren wie in Anspruch 14 beansprucht, wobei das α-Olefin aus Propylen, 1-Buten, 1-Penten, 4-Methyl-1-penten, 1-Hexen, 1-Octen und 1-Dodecen ausgewählt ist.

22. Verfahren wie in Anspruch 20 beansprucht, wobei das Dien aus linearen konjugierten oder unkonjugierten Diolefinen und insbesondere 1,3-Butadien, 1,4-Hexadien, 1,6-Octadien und monocyclischen oder polycyclischen Dienen ausgewählt ist.

23. Verfahren wie in Anspruch 14 beansprucht, wobei das Mittel mit feuerhemmenden Eigenschaften ein Magnesiumund/oder Aluminiumhydroxid ist.

24. Verfahren wie in Anspruch 23 beansprucht, wobei das Magnesiumhydroxid in der äusseren Schicht in Anteilen von 10 bis 90 Gew.% vorliegt.

25. Verfahren wie in Anspruch 23 beansprucht, wobei das Magnesiumhydroxid mit Kopplungsmitteln verwendet wird, um die Wechselwirkung zwischen dem Magnesiumhydroxid und den Olefinpolymeren zu verbessern.

26. Verfahren wie in Anspruch 25 beansprucht, wobei die Kopplungsmittel aus ungesättigten Silanen, ethylenisch ungesättigten Epoxiden, ethylenisch ungesättigten Monooder Dicarbonsäuren, ihren Anhydriden und Estern ausgewählt sind.

27. Verfahren zur Herstellung eines feuerbeständigen und wasserbeständigen elektrischen Niederspannungskabels gemäss Ansprüchen 14 bis 26, wobei die Schichten durch Extrusion in zwei getrennten Stufen aufgebracht werden, die aus der Extrusion der inneren Schicht auf den Leiter in einer ersten Stufe und der äusseren Schicht auf die innere Schicht in einer zweiten Stufe bestehen.

28. Verfahren zur Herstellung eines feuerbeständigen und wasserbeständigen elektrischen Niederspannungskabels gemäss Ansprüchen 24 bis 26, wobei die Schichten durch Extrusion in einer einzelnen Stufe aufgebracht werden.

29. Verwendung eines feuerbeständigen und wasserbeständigen elektrischen Niederspannungskabels wie in Ansprüchen 1 bis 13 definiert, in feuchten Umgebungen.

30. Verwendung eines feuerbeständigen und wasserbeständigen elektrischen Niederspannungskabels wie in Ansprüchen 1 bis 13 definiert, auf Gelände mit speziellen Sicherheitsbedingungen im Fall von Feuer.

## Revendications

1. Câble électrique basse tension, résistant au feu et à l'eau, comprenant un conducteur et une première couche interne destinée à le protéger de l'eau, à base d'un composé polymère sans halogène, réticulé ou non, et une deuxième couche externe, constituée d'un mélange d'un homopolymère ou copolymère de propylène cristallin et d'un copolymère d'éthylène et d'au moins une α-oléfine et, le cas échéant, d'un diène, et d'un agent possédant des propriétés d'ignifuge, **caractérisé en ce que** le rapport des épaisseurs de la couche externe et de la couche interne vaut de 1 à 7.

2. Câble conforme à la revendication 1, dans lequel l'épaisseur de ladite couche interne vaut de 0,05 à 1 mm.

3. Câble conforme à la revendication 1, dans lequel l'épaisseur de ladite couche externe vaut de 0,25 à 2 mm.

4. Câble conforme à la revendication 1, dans lequel ladite couche interne est faite d'un polymère choisi parmi les polyoléfines, les copolymères d'oléfine et d'ester à insaturation éthylénique, les polyesters, les polyéthers, les copolymères polyéther/polyester et leur mélanges.

5. Câble conforme à la revendication 4, dans lequel ledit polymère est choisi parmi un polyéthylène, un polypropylène, les copolymères thermoplastiques d'éthylène et de propylène, les caoutchoucs éthylène-propylène ou éthylène-propylène-diène, les caoutchoucs naturels, les caoutchoucs butyl, les copolymères d'éthylène et d'acétate de vinyle, d'éthylène et d'acrylate d'éthyle, ou d'éthylène et d'acrylate de butyle, et les copolymères d'éthylène et d'α-oléfine, ainsi que leurs mélanges.

6. Câble conforme à la revendication 1, dans lequel ladite couche externe contient, comme homopolymère ou copolymère de propylène cristallin, un polymère dont l'enthalpie de fusion est supérieure à 75 J/g, et de préférence, supérieure à 85 J/g.

7. Câble conforme à la revendication 1, dans lequel le deuxième copolymère de ladite couche externe est un copolymère qui présente une distribution étroite des masses moléculaires, et dont l'indice de distribution des masses moléculaires, déterminé par chromatographie par perméation de gel, est inférieur à 5.

8. Câble conforme à la revendication 1, dans lequel ladite α-oléfine est choisie parmi les suivantes : propylène, 1-butène, 1-pentène, 4-méthyl-1-pentène, 1-hexène, 1-octène et 1-dodécène.

9. Câble conforme à la revendication 7, dans lequel ledit diène est choisi parmi les dioléfines linéaires à doubles liaisons conjuguées ou non conjuguées, en particulier les 1,3-butadiène, 1,4-hexadiène et 1,6-octadiène, et les diènes monocycliques ou polycycliques.

10. Câble conforme à la revendication 1, dans lequel ledit agent possédant des propriétés d'ignifuge est un hydroxyde de magnésium et/ou d'aluminium.

11. Câble conforme à la revendication 10, dans lequel ledit hydroxyde de magnésium se trouve présent dans ladite couche externe en une proportion pondérale de 10 à 90 %.

12. Câble conforme à la revendication 10, dans lequel ledit hydroxyde de magnésium est employé conjointement avec des agents de couplage qui servent à améliorer l'interaction entre ledit hydroxyde de magnésium et lesdits polymères d'oléfines.

13. Câble conforme à la revendication 12, dans lequel lesdits agents de couplage sont choisis parmi les silanes insaturés, les époxydes à insaturation éthylénique, les acides monocarboxyliques ou dicarboxyliques à insaturation éthylénique, et les anhydrides et les esters de ces acides.

14. Procédé de fabrication d'un câble électrique basse tension, résistant au feu et à l'eau, comportant une étape où l'on applique par extrusion une première couche interne et une deuxième couche externe sur un conducteur, la première couche interne, destinée à protéger le conducteur de l'eau, étant à base d'un composé polymère sans halogène, réticulé ou non, et la deuxième couche externe étant constituée d'un mélange d'un homopolymère ou copolymère de propylène cristallin et d'un copolymère d'éthylène et d'au moins une α-oléfine et, le cas échéant, d'un diène, et d'un agent possédant des propriétés d'ignifuge,
**caractérisé en ce qu'**on applique les couches par extrusion de manière à obtenir un rapport des épaisseurs de la couche externe et de la couche interne valant de 1 à 7.

15. Procédé conforme à la revendication 14, dans lequel l'épaisseur de ladite couche interne vaut de 0,05 à 1 mm.

16. Procédé conforme à la revendication 14, dans lequel l'épaisseur de ladite couche externe vaut de 0,25 à 2 mm.

17. Procédé conforme à la revendication 14, dans lequel ladite couche interne est faite d'un polymère choisi parmi les polyoléfines, les copolymères d'oléfine et d'ester à insaturation éthylénique, les polyesters, les polyéthers, les copolymères polyéther/polyester et leur mélanges.

18. Procédé conforme à la revendication 17, dans lequel ledit polymère est choisi parmi un polyéthylène, un polypropylène, les copolymères thermoplastiques d'éthylène et de propylène, les caoutchoucs éthylène-propylène ou éthylène-propylène-diène, les caoutchoucs naturels, les caoutchoucs butyl, les copolymères d'éthylène et d'acétate de vinyle, d'éthylène et d'acrylate d'éthyle, ou d'éthylène et d'acrylate de butyle, et les copolymères d'éthylène et d'α-oléfine, ainsi que leurs mélanges.

19. Procédé conforme à la revendication 14, dans lequel ladite couche externe contient, comme homopolymère ou copolymère de propylène cristallin, un polymère dont l'enthalpie de fusion est supérieure à 75 J/g, et de préférence, supérieure à 85 J/g.

20. Procédé conforme à la revendication 14, dans lequel le deuxième copolymère de ladite couche externe est un copolymère qui présente une distribution étroite des masses moléculaires, et dont l'indice de distribution des masses moléculaires, déterminé par chromatographie par perméation de gel, est inférieur à 5.

21. Procédé conforme à la revendication 14, dans lequel ladite α-oléfine est choisie parmi les suivantes : propylène, 1-butène, 1-pentène, 4-méthyl-1-pentène, 1-hexène, 1-octène et 1-dodécène.

22. Procédé conforme à la revendication 20, dans lequel ledit diène est choisi parmi les dioléfines linéaires à doubles liaisons conjuguées ou non conjuguées, en particulier les 1,3-butadiène, 1,4-hexadiène et 1,6-octadiène, et les diènes monocycliques ou polycycliques.

23. Procédé conforme à la revendication 14, dans lequel ledit agent possédant des propriétés d'ignifuge est un hydroxyde de magnésium et/ou d'aluminium.

24. Procédé conforme à la revendication 23, dans lequel ledit hydroxyde de magnésium se trouve présent dans ladite couche externe en une proportion pondérale de 10 à 90 %.

25. Procédé conforme à la revendication 23, dans lequel ledit hydroxyde de magnésium est employé conjointement avec des agents de couplage qui servent à améliorer l'interaction entre ledit hydroxyde de magnésium et lesdits polymères d'oléfines.

26. Procédé conforme à la revendication 25, dans lequel lesdits agents de couplage sont choisis parmi les silanes insaturés, les époxydes à insaturation éthylénique, les acides monocarboxyliques ou dicarboxyliques à insaturation éthylénique, et les anhydrides et les esters de ces acides.

27. Procédé de fabrication d'un câble électrique basse tension, résistant au feu et à l'eau, conforme à l'une des revendications 14 à 26, dans lequel les couches sont appliquées par extrusion en deux étapes distinctes, la première étape consistant à extruder la couche interne sur le conducteur et la deuxième étape consistant à extruder la couche externe par-dessus la couche interne.

28. Procédé de fabrication d'un câble électrique basse tension, résistant au feu et à l'eau, conforme à l'une des revendications 14 à 26, dans lequel les couches sont appliquées par extrusion en une seule étape.

29. Emploi, dans des environnements humides, d'un câble électrique basse tension, résistant au feu et à l'eau, conforme à l'une des revendications 1 à 13.

30. Emploi, dans des locaux où il y a des mesures de sécurité particulières à prendre en cas d'incendie, d'un câble électrique basse tension, résistant au feu et à l'eau, conforme à l'une des revendications 1 à 13.
